(19) Europäisches Patentamt
European Patent Office
Office européen des brevets

(11) Numéro de publication: **0 578 893 A1**

(12) # DEMANDE DE BREVET EUROPEEN

(21) Numéro de dépôt: **92402085.2**

(51) Int. Cl.5: **C08L 83/07**, C08J 3/03

(22) Date de dépôt: **17.07.92**

(43) Date de publication de la demande:
**19.01.94 Bulletin 94/03**

(84) Etats contractants désignés:
**AT BE CH DE ES FR GB IT LI NL**

(71) Demandeur: **RHONE-POULENC CHIMIE**
**25, quai Paul Doumer**
**F-92408 Courbevoie Cédex(FR)**

(72) Inventeur: **Frances, Jean-Marc**
**9, Avenue Condorcet**
**F-69100 Villeurbanne(FR)**
Inventeur: **Leising, Frédéric**
**11, Allée des Fauvettes**
**F-69440 Mornant(FR)**
Inventeur: **Reeb, Roland**
**2, Allée des Pléiades**
**F-77410 Gressy(FR)**

(74) Mandataire: **Fabre, Madeleine-France et al**
**RHONE-POULENC CHIMIE,**
**Direction de la Propriété Industrielle,**
**25 Ouai Paul Doumer**
**F-92408 Courbevoie Cédex (FR)**

(54) **Dispersions aqueuses de silicone reticulant à l'oxygène de l'air en elastomères par élimination de l'eau ces dispersions pouvant être associées avec des latex organiques.**

(57) Dispersions aqueuses réticulant en élastomères par élimination de l'eau et à l'oxygène de l'air comprenant :

A. - au moins un polyorganosiloxane en émulsion de type huile dans l'eau stabilisée par au moins un tensioactif (B) choisi parmi les tensioactifs ioniques ou non ioniques, ledit polyorganosiloxane étant choisi notamment parmi :

$A_1$. - ceux comportant des groupements cyclopentènyle,

$A_2$. - ceux comportant des groupements butadiène-1,3 yle,

$A_3$. - ceux comportant des groupements cyclopentadiényle et/ou cyclopentadiénylène et/ou dicyclopentadiénylène,

C. - un catalyseur de durcissement,

D. - éventuellement au moins une charge minérale,

E. - éventuellement une dispersion aqueuse d'un latex organique comprenant au moins un monomère à base de (méth)acrylate de dicyclopentadiènyle.

EP 0 578 893 A1

La présente invention se rapporte à des dispersions aqueuses originales réticulables, notamment à l'oxygène de l'air, en élastomère par élimination de l'eau.

Ces dispersions peuvent être appliquées en couches minces ou épaisses, sans solvant organique, et peuvent, après séchage, être peintes (recouvertes de peinture). Elles peuvent également être utilisées pour réaliser des joints d'étanchéité dans le domaine du sanitaire, dans l'automobile ou dans la construction (bâtiment).

Ces dispersions sont diluables à l'eau et ne présentent pas l'inconvénient de nécessiter des solvants (organiques) spécifiques pour leur utilisation.

Ces dispersions sont pratiquement inodores et réticulent (durcissent) relativement rapidement.

Ces dispersions présentent de plus l'avantage de pouvoir être mélangées avec des latex organiques à fonctions dicyclopentadiényle généralement sans provoquer, pendant la réticulation, de démixtion du polymère silicone et du (co)polymère organique, car ces deux dispersions réagissent entre elles.

Les dispersions selon la présente invention durcissent à la température ambiante (lors de l'élimination de l'eau) et peuvent éventuellement être chauffées pour accélérer le durcissement.

Les dispersions selon la présente invention présente :

- une bonne stabilité au stockage,
- une adhérence satisfaisante sur les supports les plus divers,
- un retrait raisonnable après réticulation, suite à l'évaporation de l'eau,
- des propriétés mécaniques satisfaisantes, en particulier pour le module élastique, l'allongement à la rupture et la résistance à la déchirure.

Il a donc été trouvé et c'est ce qui fait l'objet de la présente invention une dispersion aqueuse de silicone réticulant à l'oxygène de l'air en un élastomère par élimination de l'eau dans les conditions ambiantes, caractérisée en ce qu'elle comprend :

A. - au moins un polyorganosiloxane en émulsion, du type huile dans eau, stabilisée par au moins un tensioactif (B) choisi parmi les agents tensioactifs ioniques et non ioniques et leurs mélanges, ledit polyorganosiloxane étant choisi parmi :

$A_1$. - les diorganopolysiloxanes comportant par molécule au moins trois restes cyclopenténylе, chacun de ces restes étant directement lié à un atome de silicium différent, les restes cyclopenténylеs étant choisis parmi ceux de formule :

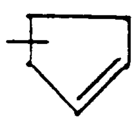 , 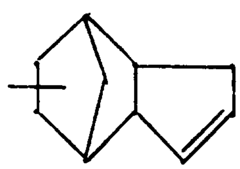 , 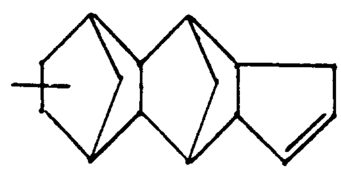 ,

$A_2$. - les polyorganosiloxanes présentant par molécule au moins trois motifs siloxyles dont au moins un motif siloxyle répond à la formule générale :

$$X'R'_aSiO_{\frac{3-a}{2}} \quad (I)$$

dans laquelle :

. X' est un reste butadiène-1,3 yle répondant essentiellement à la formule :

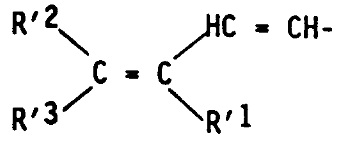 (II)

dans laquelle $R'^1$, $R'^2$ et $R'^3$, qui peuvent être identiques ou différents, représentent chacun un atome d'hydrogène ou un radical organique purement hydrocarboné ou comportant éventuellement un ou plusieurs hétéroatomes, avec la condition complémentaire selon laquelle le nombre

total d'atomes de carbone du reste X' est au plus égale à 40 ;

. R' représente un radical hydrocarboné monovalent ayant de 1 à 12 atomes de carbone, éventuellement substitué par un ou plusieurs atomes d'halogène ou par un groupement -CN (les radicaux R', quand il y en a plusieurs, pouvant être identiques ou différents entre eux) ;

. a est un nombre égal à zéro, 1 ou 2,

les polyorganosiloxanes ($A_2$) pouvant comprendre de plus des motifs siloxyles répondant à la formule :

$$R'_bSiO_{\frac{4-b}{2}} \qquad (III)$$

dans laquelle :

. R' a la même signification que celle donnée à propos dela formule (I),

. b est un nombre égal à zéro, 1 ou 3.

$A_3$. - les polyorganosiloxanes ($P_1$) ayant par molécule au moins un motif de formule :

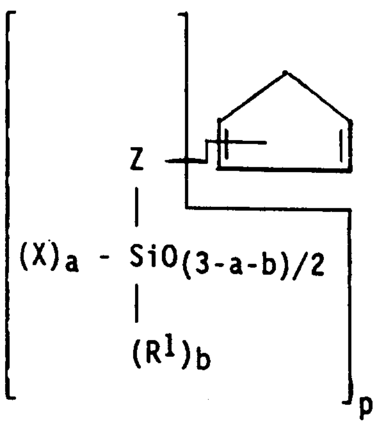

(1)

et/ou un polysiloxane ($P_2$) ayant par molécule au moins un motif de formule :

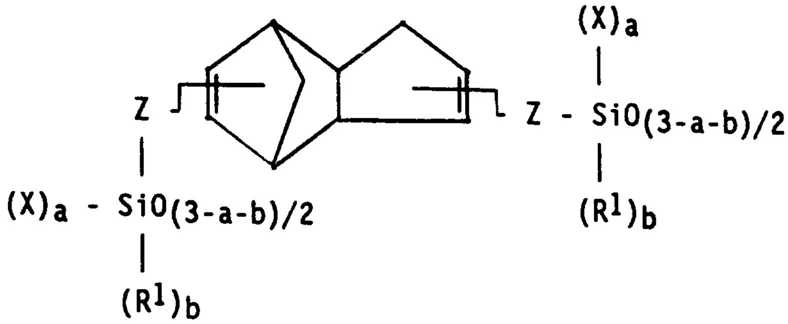

(1')

dans lesquelles :

- X, identiques ou différents, représentent des groupes hydrolysables choisis parmi un atome d'halogène et parmi les radicaux amino-N substitués, amido-N subsitués, amino-N,N disubstitués, cétiminoxy, aldiminoxy, alcoxy, acyloxy, énoxy, alcoxyalkylène-oxy,
- $R^1$, identiques ou différents représentent des groupes hydrocarbonés monovalents ayant de 1 à 10 atomes de carbone, éventuellement substitués par des atomes d'halogène ou des groupes cyano,
- Z est un radical hydrocarboné saturé divalent, linéaire ou ramifié, ayant de 1 à 10 atomes de carbone, ou un simple lien valentiel,
- a est zéro, 1 ou 2,

- b est zéro, 1 ou 2,
- a + b est au plus égal à 2,
- p est égal à 1 ou 2,
- le polysiloxane ($P_1$) ayant par molécule au moins un motif (1) si a est différent de zéro et au moins deux motifs (1) si a est égal à zéro,

C. - un catalyseur de durcissement.

D. - éventuellement au moins une charge minérale.

Les diorganosiloxanes selon $A_1$ sont décrits, ainsi que leurs procédés de préparation, dans la demande de brevet française 89/15 528 de la Société RHONE-POULENC. Ils sont par exemple choisis parmi ceux répondant à la formule :

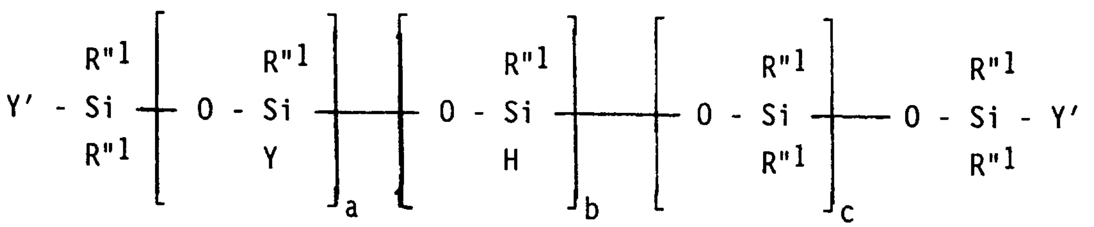

(1")

dans laquelle :

- Y représente un reste cyclopentenyle choisi parmi ceux précédemment définis,
- R"$^1$ est un radical hydrocarboné monovalent, au moins 50 % en nombre des radicaux $R^1$ étant méthyle et/ou phényle,
- Y' est Y ou R"$^1$,
- a est un nombre entier compris entre 1 et 50 inclus,
- b est un nombre entier compris entre 0 et 50 inclus,
- c est un nombre entier compris entre 0 et 1 000, de préférence entre 10 et 500 sous réserve que si a = 1, Y' est Y.

Les polyorganosiloxanes selon $A_2$ sont décrits ainsi que leurs procédés de préparation, dans la demande de brevet française 90/14 482 de la Société RHONE-POULENC. Ils sont par exemple choisis parmi :

* les copolymères polydiorganosiloxanes statistiques, séquencés ou à blocs, de formule moyenne :

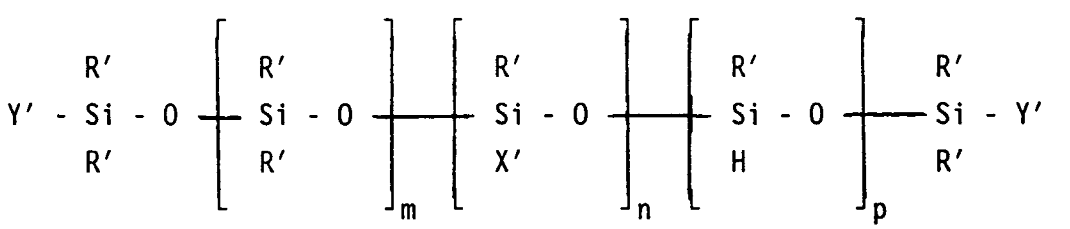

(IV)

dans laquelle :

. les symboles R' et X' ont les significations données ci-avant à propos de la formule (I) ;

. le symbole Y' représente un radical monovalent choisi parmi les radicaux X', R' et hydroxyle ;

. m est un nombre entier ou fractionnaire allant de 0 à 1 000 ;

. n est un nombre entier ou fractionnaire allant de 0 à 100 avec la condition supplémentaire selon laquelle si n = 0, au moins un des deux radicaux Y' représente le reste X' ;

. p est un nombre entier ou fractionnaire allant de 0 à 50 ;

. la somme m + n + p est au moins égale à 1 ;

* et ceux de formule moyenne :

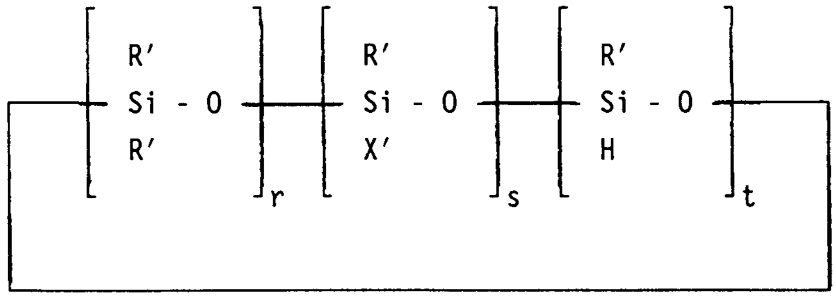 (V)

dans laquelle :

. les symboles R' et X' ont les significations données ci-avant à propos de la formule (I) ;
. r est un nombre entier ou fractionnaire allant de 0 à 9 ;
. s est un nombre entier ou fractionnaire allant de 1 à 10 ;
. t est un nombre entier ou fractionnaire allant de 0 à 9 ;
. la somme r + s + t est comprise entre 3 et 10 inclus,

Les polyorganosiloxanes selon $A_3$ comprennent avantageusement de plus d'autres motifs siloxyle répondant à la formule :

$(R^1)_c\ SiO_{(4-c)/2}$ (2)

dans laquelle :

- $R^1$ a la même signification que celle précisée ci-avant,
- c est choisi parmi zéro, 1, 2 et 3.

Ces polyorganosiloxanes selon $A_3$ sont décrits, ainsi que leurs procédés de préparation, dans la demande de brevet française 91/05 648 déposée par la Société RHONE-POULENC. Ils sont par exemple choisis :

- parmi ceux de formule moyenne :

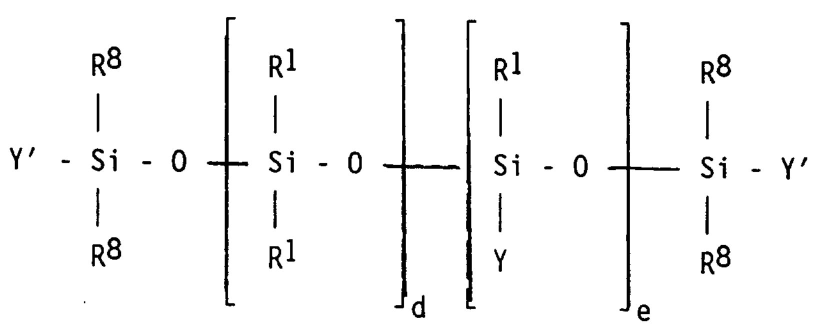 (3)

dans laquelle :

- Y représente le groupement

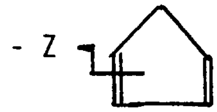

dont la signification de Z a été donnée ci-avant,

- $R^1$ et X ont la même signification que celle donnée ci-avant,
- Y' est choisi parmi les radicaux Y, $R^1$ et hydroxyle,
- $R^8$ est choisi parmi un radical $R^1$ et un radical X,
- d est un nombre compris entre 0 et 1 000,
- e est un nombre entier compris entre 0 et 50

- si e = 0, les deux radicaux Y' sont égaux à Y,
- parmi ceux de formule :

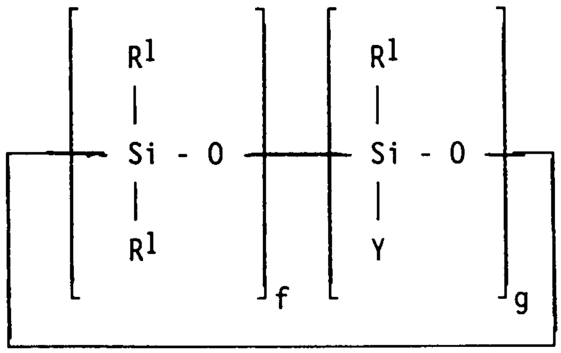

(4)

dans laquelle :
- $R^1$ et Y ont la signification donnée ci-dessus,
- f est un nombre entier compris entre 0 et 9 inclus,
- g est un nombre entier compris entre 1 et 9 inclus,
- f + g est compris entre 3 et 10 inclus.
- parmi les polysiloxanes ayant pour formule :

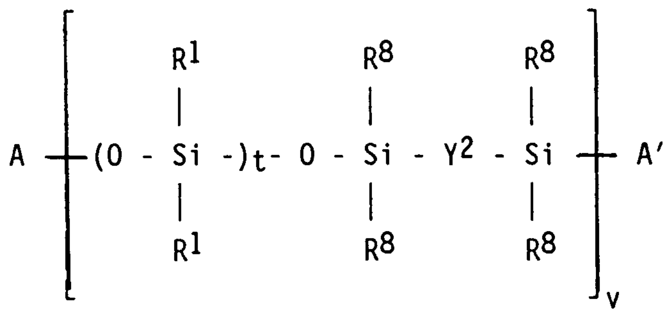

(3')

dans laquelle :
- $Y^2$ représente un groupement

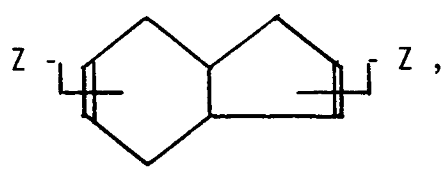

la signification de Z ayant été précisée ci-avant,
- $R^1$ a la signification donnée ci-avant,
- $R^8$ est choisi parmi un radical $R^1$ et un radical X dont la signification a été donnée ci-avant,
- A est choisi parmi :
  . un atome d'hydrogène, éventuellement substitué par un groupement $R^1{}_3Si$ -, la signification de $R^1$ ayant été donnée ci-avant,
  . un groupement

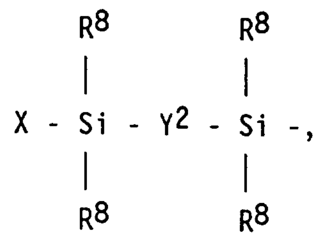

les significations de $R^8$, $Y^2$ et X ayant été données ci-avant,

- A' est choisi parmi :
  . le radical X dont la signification a été donnée ci-avant,
  . le groupement

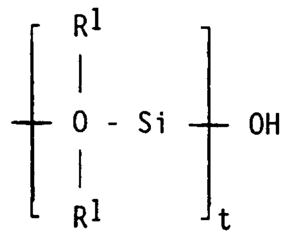

dans lequel l'atome d'hydrogène du groupement hydroxyle peut éventuellement être substitué par un groupement $R^1{}_3Si$ -,

- t est compris entre 5 et 1 000, bornes comprises,
- v est compris entre 1 et 200, bornes comrises,
  entre 2 et 200 si A est chosi parmi un atome d'hydrogène, éventuellement substitué par un groupement $R^1{}_3Si$.

. parmi les polysiloxanes ayant pour formule :

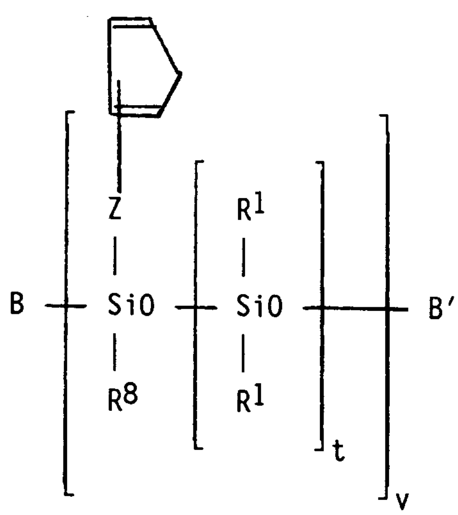

(3"')

dans laquelle :

- Z a la même signification que ci-avant,
- B est choisi parmi :
  . $R^8$ précédemment défini,
  .

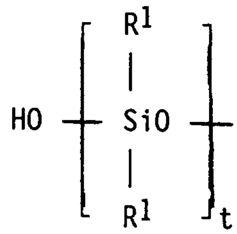

- B' est choisi parmi :
  . l'atome d'hydrogène, éventuellement substitué par un groupement $R^1{}_3Si$-,
  .

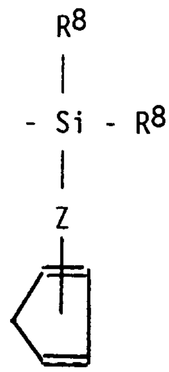

- t est compris entre 5 et 1 000, bornes comprises,
- v est compris entre 1 et 200, bornes comprises,
  v étant compris entre 2 et 200 si B' représente un atome d'hydrogène, éventuellement substitué par un groupement $R^1{}_3Si$.

. parmi les polysiloxanes ayant pour formule

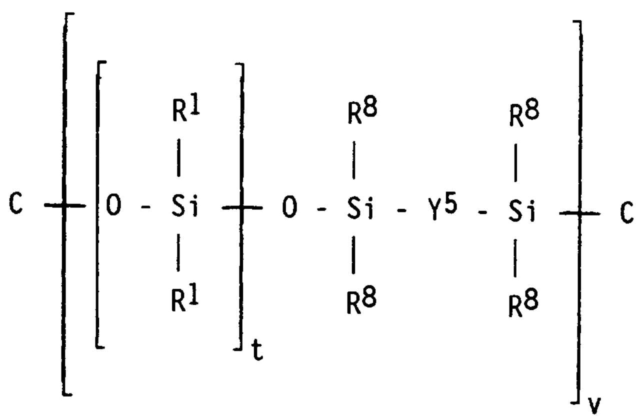

(3"")

dans laquelle :
- $Y^5$ représente un groupement

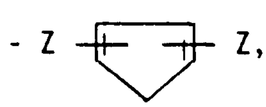

la signification de Z ayant été précisée ci-avant,

- $R^1$ et $R^8$ ont les mêmes significations que ci-avant,
- C est choisi parmi :
  . un atome d'hydrogène, éventuellement substitué par un groupement $R^1{}_3Si$ -,
  . un groupement

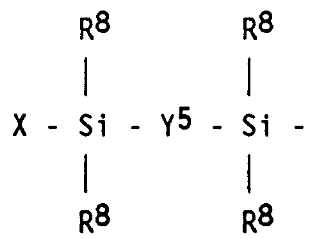

- C' est choisi parmi :
  . le radical X dont la signification a été donnée ci-avant,
  . le groupement

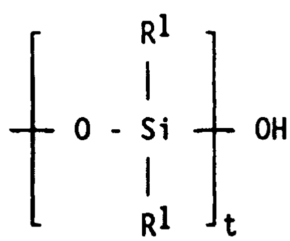

  dans lequel l'atome d'hydrogène du groupement hydroxyle peut éventuellement être substitué par un groupement $R^1{}_3$ Si-,
- t est compris entre 5 et 1 000, bornes comprises,
- v est compris entre 1 et 200, bornes comprises,
  entre 2 et 200 si C est choisi parmi un atome d'hydrogène, éventuellement substitué par $R^1{}_3Si$.

- parmi les polysiloxanes de formule :

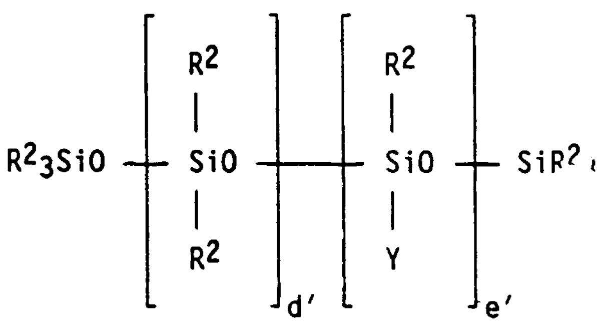

(3")

dans laquelle :
- Y représente le groupement

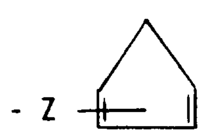

dans lequel Z est un simple lien valentiel ou un groupement hydrocarboné ayant de 1 à 10 atomes

de carbone, de préférence 3 atomes de carbone,

- $R^2$, identiques ou différents, représentent des groupes hydrocarbonés monovalents ayant de 1 à 10 atomes de carbone,
- d' est un nombre compris entre 10 et 1 000,
- e' est compris entre 2 et 50.

- parmi les mélanges des polyorganosiloxanes ci-dessus.

Le tensioactif (B) ou surfactant (B) utilisé pour réaliser une émulsion avec le polyorganosiloxane A précédemment décrit est choisi parmi les tensioactifs ioniques ou non-ioniques et leurs mélanges. On peut ainsi utiliser des surfactants (B) anioniques ou cationiques. De tels produits sont décrits dans le brevet américain 4 902 499, colonne 4-11. Avantageusement on utilise des surfactants anioniques ou non-ioniques et leurs mélanges.

Comme agents tensioactifs B anioniques on peut notamment citer les alkylbenzènesulfonates de métaux alcalins, alkylsulfates de métaux alcalins, les alkyléthersulfates de métaux alcalins, les alkylaryléthersulfates de métaux alcalins et les dioctylsulfosuccinates de métaux alcalins.

Comme agents tensioactifs B non-ioniques on peut notamment citer les acides gras polyéthoxylés, les esters de sorbitan, les esters de sorbitan polyéthoxylés, les alkylphénols polyéthoxylés, les alcools gras polyéthoxylés, les amides gras polyéthoxylés ou polyglycérolés, les alcools et alphadiols polyglycérolés, l'alcool polyvinylique.

Il est recommandé généralement d'utiliser de 0,1 à 50 parties de surfactant (B), de préférence de 0,2 à 30 parties, pour 50 parties (en poids) de polyorganosiloxane A.

Comme catalyseur de durcissement (C) on utilise une quantité catalytiquement efficace par exemple de sel (ou de mélange de sels) d'acide monocarboxylique de métaux tels que le baryum, le bismuth, le calcium, le cérium, le cobalt, le chrome, le cuivre, le fer, le plomb, le magnésium, le manganèse, le nickel, les terres rares, l'étain, le zinc et le zirconium. D'autres ligands organiques peuvent être liés aux métaux tels que les ligands chélatés (acétylacétonate) et carbonyle. Les catalyseurs recommandés sont les sels d'acides monocarboxyliques de cobalt, de fer, de manganèse notamment l'éthyl-2 hexanoate de cobalt et plus particulièrement le dilaurate ou diacétylacétonate de dibutylétain.

Par l'expression "quantité catalytiquement efficace de catalyseur" (2) on entend une quantité suffisante pour assurer une réticulation convenable. Des quantités de 0,001 à 5 parties, de préférence de 0,1 à 3 parties en poids de sel métallique pour 100 parties de polysiloxane (1), conviennent généralement bien.

Lorsque le polyorganosiloxane A utilisé correspond à ceux décrits en $A_3$ et $A_4$ ci-avant, dans lesquels il reste des groupements hydrolysables X, on utilise avantageusement comme catalyseurs, un sel d'étain en association avec un sel de cobalt ou de zirconium. Si le polyorganoslloxane A utilisé ci-avant correspond à ceux de formules $A_1$ et $A_2$ décrits ci-avant, le catalyseur (C) est de préférence à base de zirconium et/ou de cobalt.

Les charges minérales (D) sont utilisées à raison de 0 à 250 parties, en poids, de préférence de 10 à 200 parties, pour 100 parties de polyorganosiloxane (A).

Ces charges peuvent se présenter par exemple sous la forme de silice colloïdale, de silice de précipitation ou de silice de combustion, ces deux dernières étant éventuellement traitées en surface de manière connue par un produit organosilicique comme par exemple par un diorganocyclopolysiloxane, un hexaorganodisiloxane ou par un hexaorganodisilazane.

Ces charges (D) peuvent se présenter également par exemple sous forme de carbonate de calcium, de dioxyde de titane, d'oxyde d'alumine, d'alumine hydratée, d'oxyde de zinc, de mica, de talc, d'oxyde de baryum, de sulfate de baryum ou de chaux éteinte.

Pour préparer les dispersions aqueuses selon la présente invention il est recommandé d'ajouter sous agitation, à température ambiante, à l'émulsion du polyorganosiloxane (A) comprenant le tensioactif (B) le catalyseur (C), puis la charge minérale (D) si la dispersion en contient.

Les dispersions aqueuses selon la présente invention ont une teneur en extrait sec généralement supérieure à 30 %, de préférence supérieure à 40 %.

Eventuellement les dispersions selon la présente invention peuvent comprendre de plus un agent (ou un mélange d'agents) d'adhérence (F), à raison de 0 à 20 parties, de préférence de 0,2 à 10 parties, en poids, pour 100 parties du polyorganosiloxane (A).

Cet agent d'adhérence est choisi par exemple parmi les composés organosiliciques portant à la fois d'une part des groupes organiques substitués par des radicaux choisis dans le groupe des radicaux amino, uréido, isocyanato, époxy, alkényle, isocyanurate, hydantoile, mercaptoester et d'autre part des groupes hydrolysables liés aux atomes de silicium. A titre illustratif peuvent être cités les composés organosiliciques répondant aux formules suivantes :

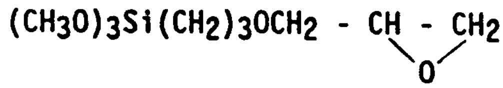

$NH_2CH_2CH_2NHCH_2CH(CH_3)COO(CH_2)_3Si(OCH_3)_3$

$(C_2H_5O)_3Si(CH_2)_3NH_2$

$(CH_3O)_3Si(CH_2)_3NHCH_2CH_2NH_2$

Les dispersions aqueuses selon l'invention peuvent contenir en outre les adjuvants ou additifs usuels, utilisés habituellement dans les compositions élastomères silicones, bien connues de l'homme de métier. A titre d'adjuvants on peut citer, de façon non limitative, les huiles polydiorganosiloxanes non réactives telles que par exemple les huiles polydiméthylsiloxanes à terminaisons triméthylsilyles, les statilisants thermiques, les pigments de coloration.

Les dispersions aqueuses telles que celles précédemment définies présentent l'avantage de pouvoir être mélangées avec des latex organiques à fonctions dicyclopentadiényle, c'est-à-dire avec des dispersions aqueuses contenant de tels composés organiques.

Les dispersions aqueuses selon la présente invention contenant de tels latex organiques permettent ainsi l'obtention, après élimination et réticulaltion à l'air, d'élastomères mixtes comprenant des polymères siloxanes et des polymères organiques.

De tels latex organiques sont décrits par exemple dans le brevet américain 4 144 212 et ont une teneur en extrait sec généralement supérieure à 20 %, de préférence supérieure à 60 %.

Ainsi les dispersions aqueuses selon la présente invention peuvent comprendre en plus des composant (A), (B), (C), (D) et (F) précédemment définis, une dispersion aqueuse (E) d'un copolymère organique (latex) présentant une taille de particules comprise entre 0,01 et 0,5 microns, un extrait sec compris entre 20 et 70 % en poids, un des monomères étant un (méth)acrylate de dicyclopentadiènyle.

Plus précisément les dispersions aqueuses selon la présente invention peuvent comprendre en plus des composants (A), (B), (C), (D) et (F) :

E) - une dispersion aqueuse d'un copolymère (latex) obtenu à partir d'un mélange de monomères copolymérisables consistant essentiellement, en pourcentage en poids par rapport au poids total de monomères utilisés,

a) - environ 1 à 20 % d'acrylate de dicyclopentadiényle ou de méthacrylate de dicyclopentadiényle,

b) - environ 99 à 20 % d'un acrylate ou d'un méthacrylate d'alkyle ou de leur mélange, dans lesquels les groupes alkyles contiennent de 1 à 4 atomes de carbone,

c) - environ 0 à 5 % d'acide acrylique ou méthacrylique,

d) - environ 0 à 40 % d'autres monomères acryliques choisis parmi les acrylates ou méthacrylates dont les groupes alkyles contiennent de 5 à 18 atomes de carbone, l'acrylamide, le méthacrylamide, le dicétone acrylamide, l'acrylonitrile, le méthacrylonitrile, et

e) - environ 0 à 80 % d'autres monomères insaturés qui sont polymérisables avec a, b, c et d.

Les dispersions aqueuses selon la présente invention comprennent, en poids :

A) - 100 parties de polyorganosiloxane en émulsion, de type huile dans l'eau, stabilisée par au moins un tensioactif (B),

C) - de 0,001 à 5 parties de catalyseur,

D) - de 0 à 250 parties de charge minérale,

E) - de 0 à 400 parties, de préférence de 0 à 100 parties de latex tel que défini ci-avant.

Les exemples suivants illustrent des modes de réalisation des dispersions aqueuses selon la préseite invention et donnent les caractéristiques des élastomères obtenus avec de telles dispersions aqueuses, à savoir :

- la dureté SHORE A (DSA) selon la norme NF-T-51 109,
- la résistance à la rupture (R/R) en MPa selon la norme NF-T-46 002,
- l'allongement à la rupture (A/R) en % selon la norme NF-T- 46 002,
- le module (M) en MPa pour un allongement de 100 %.

- **EXEMPLE 1** :

Une dispersion aqueuse, appelée par la suite M, est préparée en suivant le mode opératoire de l'exemple 1 du brevet américain USP 4 144 212 et permet d'obtenir ainsi un latex réticulant à l'oxygène de l'air.

Les pourcentages en poids des monomères de départ sont :

- 9 % de styrène,
- 74 % d'acrylate de butyle,
- 10 % d'éthyl-2 hexanoate,
- 3 % d'acide acrylique,
- 4 % d'acrylate de dicyclopentadiényle.

Le latex ainsi obtenu est conservé sous azote et a une teneur en extrait sec d'environ 60 %.

- **EXEMPLE 2** :

Une dispersion aqueuse de silicone réticulant à l'oxygène de l'air en élastomère est préparée à partir d'une émulsion obtenue en coulant, à 20 °C sous agitation et balayage d'azote :

- 1 kg de polyorganosiloxane ($A_1$) de formule :

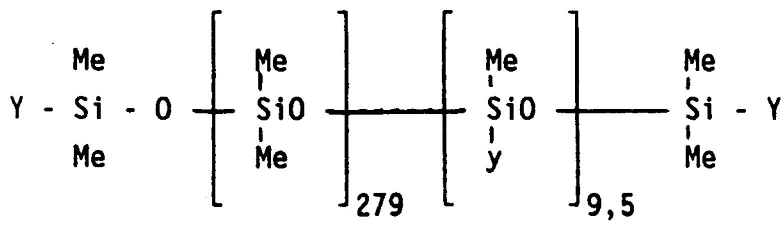

dans laquelle :

- Me = $-CH_3$
- Y =

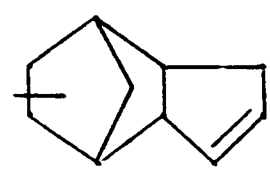

la masse moléculaire en moyenne en nombre (Mn) de ($A_1$) est de 22 400, la viscosité de ($A_1$) est de 600 mPa.s

- dans 500 g d'un mélange d'alcool polyvinylique (à 10 %) dans l'eau.

L'émulsion ainsi obtenue est affinée dans un broyeur MORITZ (dont l'écartement des disques est de 20/100) et est appelée dispersion N par la suite. Elle est conservée sous azote.

La préparation du polyorganosiloxane ($A_1$) est décrite dans la demande de brevet française 89/15 528 de la Société RHONE-POULENC.

- **EXEMPLES 3-8** :

Différents mélanges sont effectués à partir de M et N auxquels on ajoute 0,6 % d'une solution d'octoate de cobalt dans le white-spirit à 6 % de cobalt vendue par la Société RHONE-POULENC Ltd, sous la marque MANOSEC.

- Exemple 3 : 100 parts de N + 0 part de M,
- Exemple 4 : 70 parts de N + 30 parts de M,
- Exemple 5 : 50 parts de N + 50 parts de M,
- Exemple 6 : 30 parts de N + 70 parts de M,
- Exemple 7 : 20 parts de N + 80 parts de M,
- Exemple 8 : 0 part de N + 100 parts de M.

Des films de 2 mm d'épaisseur sont obtenus à partir des mélanges, selon les exemples 3 à 8 ci-avant, déposés sur papier couché.

Après séchage à l'oxygène de l'air tous les produits sont démoulables en 48 heures.

Les DSA (au bout de 7 jours) et A/R sont les suivants :

| | DSA | A/R |
|---|---|---|
| - exemple 3 | 50 | 60 |
| - exemple 4 ) | ) séparation de phase | |
| - exemple 5 ) | | |
| - exemple 6 | 25 | 300 |
| - exemple 7 | 20 | 300 |
| - exemple 8 | 10 | 400 |

- **EXEMPLE 9** :

Une dispersion aqueuse d'huile silicone réticulant à l'oxygène de l'air en élastomère est obtenue en opérant selon le mode opératoire et avec les mêmes quantités de produits que ceux de l'exemple 2, mais en utilisant au lieu de ($A_1$) un polyorganosiloxane ($A_2$) de formule moyenne :

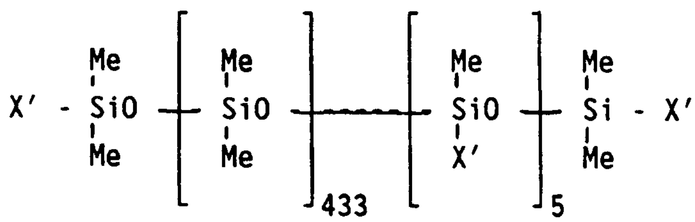

dans laquelle :
Me = $-CH_3$
X' =

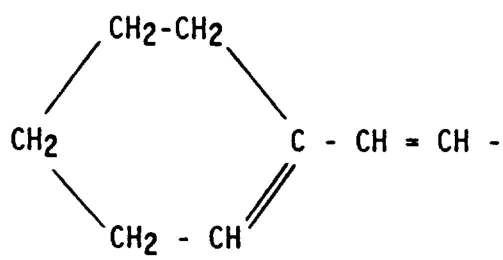

L'émulsion obtenue est conservée sous azote et est appelée $N_1$ par la suite.

Le polyorganosiloxane ($A_2$) est synthétisé par hydrosilylation de l'éthynylcyclohexène en présence de catalyseur à base de platine à partir d'une huile polydiméthyl, méthylhydrogénosiloxane $\alpha,\omega$-diméthylhydrogéno, selon la demande de brevet française 90/14 482 de la Société RHONE-POULENC.

- **EXEMPLES 10-14** :

Différents mélanges sont réalisés à partir de M et $N_1$ auxquels on ajoute 0,6 % d'une solution d'octoate de cobalt dans le white spirit à 6 % de cobalt.

Des films de 2 mm d'épaisseur sont obtenus à partir des mélanges.

Après durcissement à l'oxygène de l'air et élimination de l'eau les élastomères obtenus ont les propriétés suivantes, selon les mélanges :

| | Parts de N1 | Parts de M | A/R | R/R | M ( à 100 % allongement |
|---|---|---|---|---|---|
| Exemple 10 | 100 | 0 | 43 | 0,3 | |
| Exemple 11 | 70 | 30 | 131 | 0,4 | 0,3 |
| Exemple 12 | 50 | 50 | 222 | 0,5 | 0,3 |
| Exemple 13 | 30 | 70 | 350 | 0,6 | 0,2 |
| Exemple 14 | 0 | 100 | 536 | 1,1 | 0,3 |

- **EXEMPLES 15-20** :

Différents mélanges sont réalisés à partir, en poids de :

- 70 parts de M
- 30 parts de $N_1$
- 0,6 part de solution d'octoate de cobalt à 6 % de cobalt
- x parts de charge.

Les formulations sont gardées en cartouches étanches 48 heures avant d'être extrudées et on mesure les propriétés mécaniques sur des films ayant 2 mm d'épaisseur.

Les résultats sont les suivants :

| n° de l'exemple | 13 | 15 | 16 | 17 | 18 | 19 | 20 |
|---|---|---|---|---|---|---|---|
| Nature de la charge | 0 | TiO2 | Kaolin | Silicate d'Al | CaCO3 | SiO2 colloïdale | Al2O3 |
| x parts de charge | 0 | 10 | 10 | 10 | 20 | 10 | 10 |
| A/R % | 350 | 242 | 194 | 168 | 204 | 69 | 198 |
| R/R (MPa) | 0,6 | 0,3 | 0,3 | 0,8 | 0,5 | 0,7 | 0,3 |
| M (à 100 % d'allongement) | 0,2 | 0,2 | 0,2 | 0,5 | 0,3 | 0,2 | 0,2 |

**Revendications**

**1.** Dispersion aqueuse de silicone réticulant à l'oxygène de l'air en un élastomère par élimination de l'eau dans les conditions ambiantes, caractérisée en ce qu'elle comprend :

A. - au moins un polyorganosiloxane en émulsion, du type huile dans eau, stabilisée par au moins un tensioactif (B) choisi parmi les agents tensioactifs ioniques et non ioniques et leurs mélanges, ledit polyorganosiloxane étant choisi parmi :

$A_1$. - les diorganopolysiloxanes comportant par molécule au moins trois restes cyclopenténylе, chaucun de ces restes étant directement lié à un atome de silicium différent, les restes cyclopenténylеs étant choisis parmi ceux de formule :

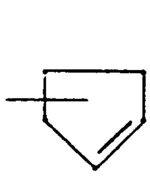 , 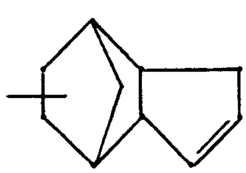 , 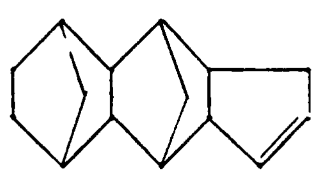 ,

$A_2$. - les polyorganosiloxanes présentant par molécule au moins trois motifs siloxyles dont au moins un motif siloxyle répond à la formule générale :

$$X'R'_aSiO_{\frac{3-a}{2}} \qquad (I)$$

dans laquelle :

. X' est un reste butadiène-1,3 yle répondant essentiellement à la formule :

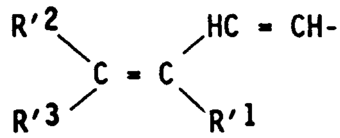

(II)

dans laquelle R'1, R'2 et R'3, qui peuvent être identiques ou différents, représentent chacun un atome d'hydrogène ou un radical organique purement hydrocarboné ou comportant éventuellement un ou plusieurs hétéroatomes, avec la condition complémentaire selon laquelle le nombre total d'atomes de carbone du reste X' est au plus égale à 40 ;

. R' représente un radical hydrocarboné monovalent ayant de 1 à 12 atomes de carbone, éventuellement substitué par un ou plusieurs atomes d'halogène ou par un groupement -CN (les radicaux R', quand il y en a plusieurs, pouvant être identiques ou différents entre eux) ;

. a est un nombre égal à zéro, 1 ou 2,

les polyorganosiloxanes ($A_2$) pouvant comprendre de plus des motifs siloxyles répondant à la formule :

$$R'_bSiO_{\frac{4-b}{2}} \quad (III)$$

dans laquelle :

. R' a la même signification que celle donnée à propos dela formule (I),

. b est un nombre égal à zéro, 1 ou 3.

$A_3$. - les polyorganosiloxanes ($P_1$) ayant par molécule au moins un motif de formule :

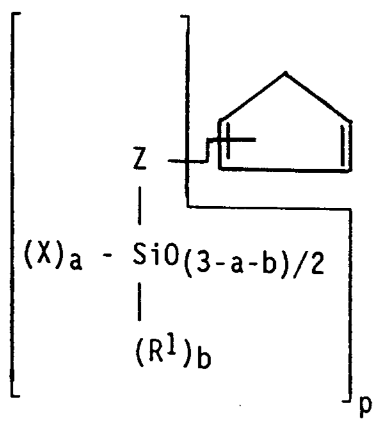

(1)

et/ou un polysiloxane ($P_2$) ayant par molécule au moins un motif de formule :

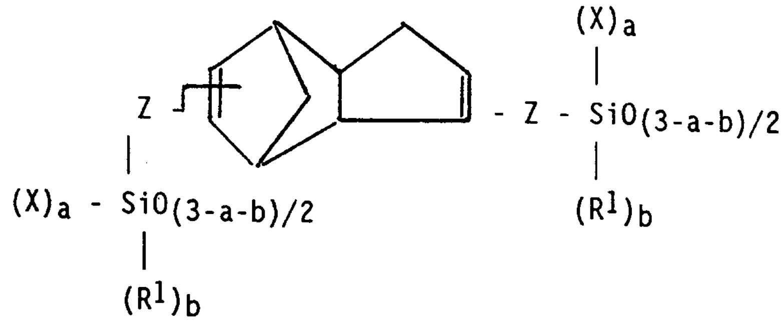

(1')

dans lesquelles :

- X, identiques ou différents, représentent des groupes hydrolysables choisis parmi un atome d'halogène et parmi les radicaux amino-N substitués, amido-N subsitués, amino-N,N disubstitués, cétiminoxy, aldiminoxy, alcoxy, acyloxy, énoxy, alcoxyalkylène-oxy,
- $R^1$, identiques ou différents représentent des groupes hydrocarbonés monovalents ayant de 1 à 10 atomes de carbone, éventuellement substitués par des atomes d'halogène ou des groupes cyano,
- Z est un radical hydrocarboné saturé divalent, linéaire ou ramifié, ayant de 1 à 10 atomes de carbone, ou un simple lien valentiel,
- a est zéro, 1 ou 2,
- b est zéro, 1 ou 2,
- a + b est au plus égal à 2,
- p est égal à 1 ou 2,
- le polysiloxane ($P_1$) ayant par molécule au moins un motif (1) si a est différent de zéro et au moins deux motifs (1) si a est égal à zéro,

C. - un catalyseur de durcissement.

D. - éventuellement au moins une charge minérale.

**2.** Dispersion aqueuse selon la revendication 1, caractérisée en ce que les diorganopolysiloxanes ($A_1$) répondent à la formule :

$$Y' - \overset{R''^1}{\underset{R''^1}{Si}} - \left[ O - \overset{R''^1}{\underset{Y}{Si}} \right]_a - \left[ O - \overset{R''^1}{\underset{H}{Si}} \right]_b - \left[ O - \overset{R''^1}{\underset{R''^1}{Si}} \right]_c - O - \overset{R''^1}{\underset{R''^1}{Si}} - Y' \quad (1'')$$

dans laquelle :

- Y représente un reste cyclopentenyle choisi parmi ceux précédemment définis,
- $R''^1$ est un radical hydrocarboné monovalent, au moins 50 % en nombre des radicaux $R^1$ étant méthyle et/ou phényle,
- Y' est Y ou $R''^1$,
- a est un nombre entier compris entre 1 et 50 inclus,
- b est un nombre entier compris entre 0 et 50 inclus,
- c est un nombre entier compris entre 0 et 1 000, de préférence entre 10 et 500
  sous réserve que si a = 1, Y' est Y,

en ce que les polyorganosiloxanes ($A_2$) sont choisis parmi :

* les copolymères polydiorganosiloxanes statistiques, séquencés ou à blocs, de formule moyenne :

$$Y' - \overset{R'}{\underset{R'}{Si}} - O - \left[ \overset{R'}{\underset{R'}{Si}} - O \right]_m - \left[ \overset{R'}{\underset{X'}{Si}} - O \right]_n - \left[ \overset{R'}{\underset{H}{Si}} - O \right]_p - \overset{R'}{\underset{R'}{Si}} - Y' \quad (IV)$$

dans laquelle :

. les symboles R' et X' ont les significations données ci-avant à propos de la formule (I) ;

. le symbole Y' représente un radical monovalent choisi parmi les radicaux X', R' et hydroxyle ;

. m est un nombre entier ou fractionnaire allant de 0 à 1 000 ;

. n est un nombre entier ou fractionnaire allant de 0 à 100 avec la condition supplémentaire selon laquelle si n = 0, au moins un des deux radicaux Y' représente le reste X' ;

. p est un nombre entier ou fractionnaire allant de 0 à 50 ;

. la somme m + n + p est au moins égale à 1 ;

* et ceux de formule moyenne :

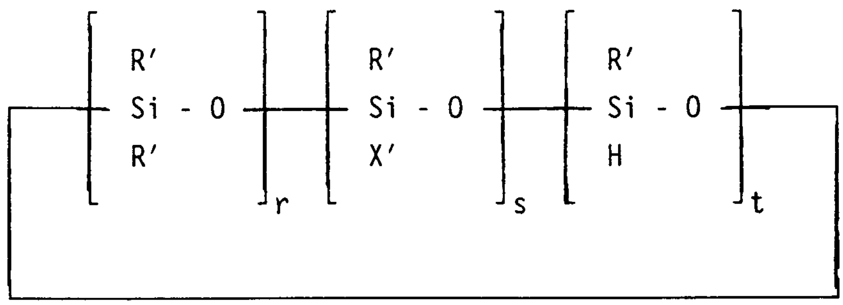

dans laquelle :

. les symboles R' et X' ont les significations données ci-avant à propos de la formule (I) ;

. r est un nombre entier ou fractionnaire allant de 0 à 9 ;

. s est un nombre entier ou fractionnaire allant de 1 à 10 ;

. t est un nombre entier ou fractionnaire allant de 0 à 9 ;

. la somme r + s + t est comprise entre 3 et 10 inclus,

et en ce que les polyorganosiloxanes selon ($A_3$) comprennent de plus d'autres motifs siloxyle répondant à la formule :

$(R^1)_c\ SiO_{(4-c)/2}$ (2)

dans laquelle :

- $R^1$ a la même signification que celle précisée ci-avant,
- c est choisi parmi zéro, 1, 2 et 3.

**3.** Dispersion aqueuse selon l'une quelconque des revendications précédentes, caractérisée en ce que les polyorganosiloxanes selon $A_3$ sont choisis :

- parmi ceux de formule moyenne :

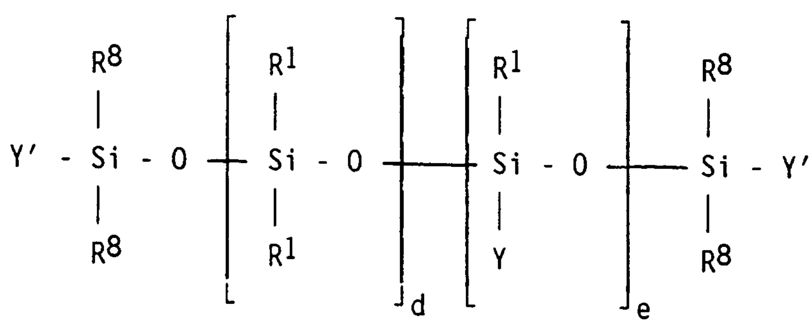

(3)

dans laquelle :

- Y représente le groupement

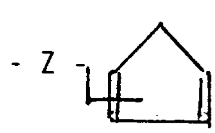

dont la signification de Z a été donnée ci-avant,

- $R^1$ et X ont la même signification que celle donnée ci-avant,
- Y' est choisi parmi les radicaux Y, $R^1$ et hydroxyle,

- $R^8$ est choisi parmi un radical $R^1$ et un radical X,
- d est un nombre compris entre 0 et 1 000,
- e est un nombre entier compris entre 0 et 50
- si e = 0, les deux radicaux Y' sont égaux à Y,

- parmi ceux de formule :

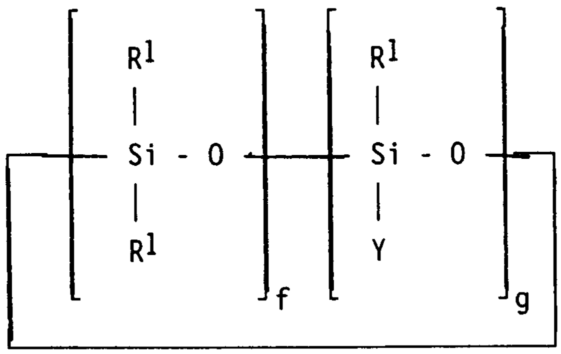

(4)

dans laquelle :

- $R^1$ et Y ont la signification donnée ci-dessus,
- f est un nombre entier compris entre 0 et 9 inclus,
- g est un nombre entier compris entre 1 et 9 inclus,
- f + g est compris entre 3 et 10 inclus.

- parmi les polysiloxanes ayant pour formule :

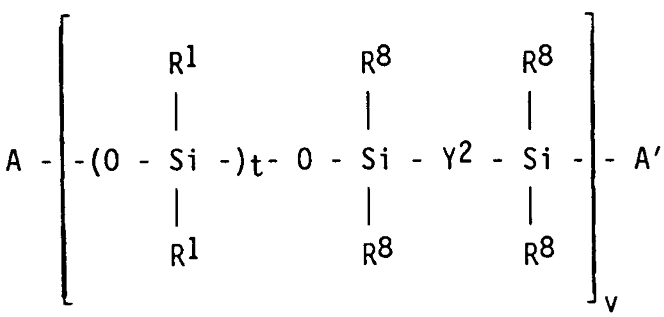

(3')

dans laquelle :

- $Y^2$ représente un groupement

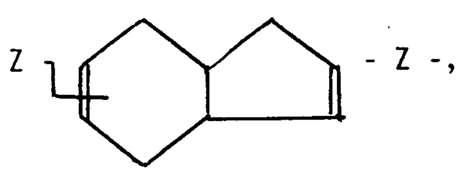

la signification de Z ayant été précisée ci-avant,

- $R^1$ a la signification donnée ci-avant,
- $R^8$ est choisi parmi un radical $R^1$ et un radical X dont la signification a été donnée ci-avant,
- A est choisi parmi :
  - . un atome d'hydrogène, éventuellement substitué par un groupement $R^1{}_3Si$ -, la signification de $R^1$ ayant été donné ci-avant,
  - . un groupement

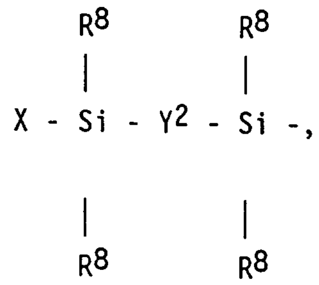

les significations de $R^8$, $Y^2$ et X ayant été données ci-avant,

- A' est choisi parmi :
  . le radical X dont la signification a été donnée ci-avant,
  . le groupement

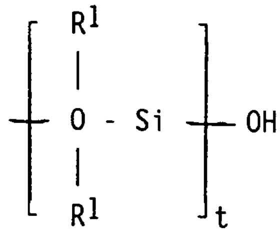

dans lequel l'atome d'hydrogène du groupement hydroxyle peut éventuellement être substitué par un groupement $R^1{}_3Si$ -,

- t est compris entre 5 et 1 000, bornes comprises,
- v est compris entre 1 et 200, bornes comrises,
  entre 2 et 200 si A est chosi parmi un atome d'hydrogène, éventuellement substitué par un groupement $R^1{}_3Si$.

. parmi les polysiloxanes ayant pour formule :

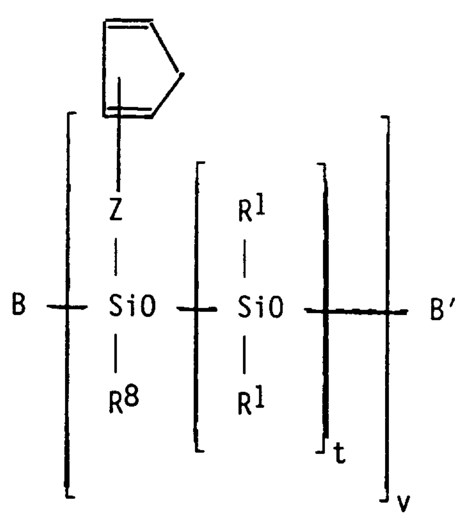

(3"')

dans laquelle :

- Z a la même signification que ci-avant,
- B est choisi parmi :
  . $R^8$ précédemment défini,
  .

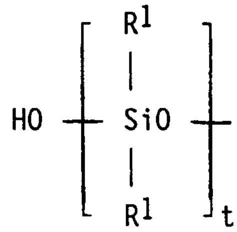

- B' est choisi parmi :
  . l'atome d'hydrogène, éventuellement substitué par un groupement $R^1{}_3Si$-,
  .

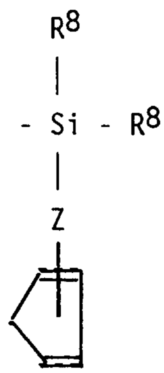

- t est compris entre 5 et 1 000, bornes comprises,
- Y est compris entre 1 et 200, bornes comprises,
  v étant compris entre 2 et 200 si B' représente un atome d'hydrogène, éventuellement substitué par un groupement $R^1{}_3Si$.

. parmi les polysiloxanes ayant pour formule

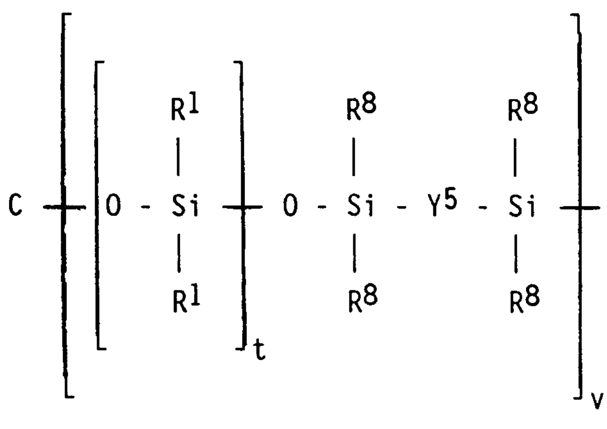

(3"")

dans laquelle :
- $Y^5$ représente un groupement

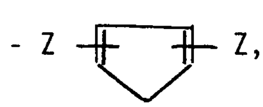

la signification de Z ayant été précisée ci-avant,
- $R^1$ et $R^8$ ont les mêmes significations que ci-avant,

- C est choisi parmi :
  . un atome d'hydrogène, éventuellement substitué par un groupement $R^1{}_3Si$ -,
  . un groupement

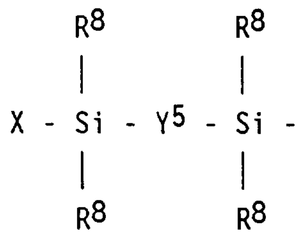

- C' est choisi parmi :
  . le radical X dont la signification a été donnée ci-avant,
  . le groupement

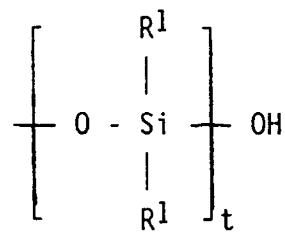

dans lequel l'atome d'hydrogène du groupement hydroxyle peut éventuellement être substitué par un groupement $R^1{}_3$ Si-,

- t est compris entre 5 et 1 000, bornes comprises,
- v est compris entre 1 et 200, bornes comprises,
  entre 2 et 200 si C est choisi parmi un atome d'hydrogène, éventuellement substitué par $R^1{}_3Si$.

- parmi les polysiloxanes de formule :

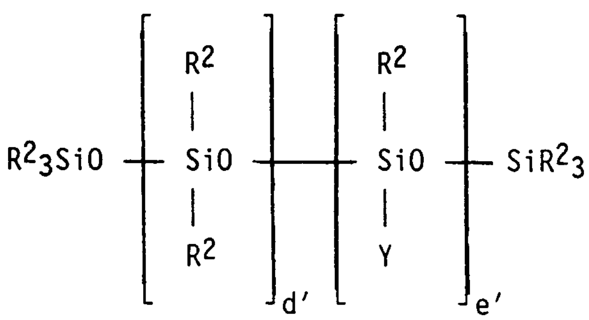

(3")

dans laquelle :

- Y représente le groupement

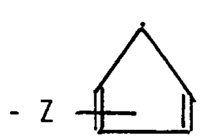

dans lequel Z est un simple lien valentiel ou un groupement hydrocarboné ayant de 1 à 10

atomes de carbone, de préférence 3 atomes de carbone,
- $R^2$, identiques ou différents, représentent des groupes hydrocarbonés monovalents ayant de 1 à 10 atomes de carbone,
- d' est un nombre compris entre 10 et 1 000,
- e' est compris entre 2 et 50.

- parmi les mélanges des polyorganosiloxanes ci-dessus.

**4.** Dispersion aqueuse selon l'une quelconque des revendications précédentes, caractérisée en ce que sa teneur en extrait sec est supérieure à 30 %, de préférence à 40 %.

**5.** Dispersion aqueuse selon l'une quelconque des revendications précédentes, caractérisée en ce que lorsqu'elle contient une charge minérale cette dernière est de préférence du carbonate de calcium ou de la silice.

**6.** Dispersion aqueuse selon l'une quelconque des revendications précédentes, caractérisée en ce que le catalyseur de durcissement est de préférence à base de composé de cobalt et/ou de zirconium et/ou éventuellement d'étain.

**7.** Dispersion aqueuse selon l'une quelconque des revendications précédentes, caractérisée en ce qu'elle comprend de plus :
E. - une dispersion aqueuse d'un (co)polymère organique (latex) présentant une taille de particules comprise entre 0,01 et 0,5 microns, un extrait sec compris entre 20 et 70 % en poids, un des monomères étant un (méth)acrylate de dicyclopentadiènyle.

**8.** Dispersion aqueuse selon l'une quelconque des revendications 1 à 6, caractérisée en ce qu'elle contient de plus :
E. - une dispersion aqueuse d'un copolymère (latex) obtenu à partir d'un mélange de monomères copolymérisables consistant essentiellement, en pourcentage en poids par rapport au poids total de monomères utilisés,
a) - environ 1 à 20 % d'acrylate de dicyclopentadiéyle ou de méthacrylate de dicyclopentadiényle,
b) - environ 99 à 20 % d'un acrylate ou d'un méthacrylate d'alkyle ou de leur mélange, dans lesquels les groupes alkyles contiennent de 1 à 4 atomes de carbone,
c) - environ 0 à 5 % d'acide acrylique ou méthacrylique,
d) - environ 0 à 40 % d'autres monomères acryliques choisis parmi les acrylates ou méthacrylates dont les groupes alkyles contiennent de 5 à 18 atomes de carbone, l'acrylamide, le méthacrylamide, le dicétone acrylamide, l'acrylonitrile, le méthacrylonitrile, et
e) - environ 0 à 80 % d'autres monomères insaturés qui sont polymérisables avec a, b, c et d.

**9.** Dispersion aqueuse selon l'une quelconque des revendications 7 ou 8, caractérisée en ce qu'elle comprend en poids :
A. - 100 parties de polyorganosiloxane en émulsion ayant une teneur en extrait sec d'au moins 30 %,
C. - de 0,001 à 5 parties de catalyseur,
D. - de 0 à 250 parties de charge minérale,
E. - de 0 à 400 parties, de préférence de 0 à 100 parties de latex.

Office européen des brevets

# RAPPORT DE RECHERCHE EUROPEENNE

Numero de la demande

EP 92 40 2085

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A,D | EP-A-0 430 827 (RHONE-POULENC CHIMIE)<br>* revendications 1,2 * | 1 | C08L83/07<br>C08J3/03 |
| A | EP-A-0 434 574 (RHONE-POULENC CHIMIE)<br>* revendication 1 * | 1 | |
| A | EP-A-0 279 373 (WACKER-CHEMIE GMBH)<br>* revendication 1 *<br>* page 3, ligne 1 *<br>* page 6, ligne 9 - ligne 28 * | 1 | |

DOMAINES TECHNIQUES RECHERCHES (Int. Cl.5 )

C08L
C08J
C08G

Le présent rapport a été établi pour toutes les revendications

| Lieu de la recherche | Date d'achèvement de la recherche | Examinateur |
|---|---|---|
| LA HAYE | 24 FEVRIER 1993 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)